# NOUVEAU FASCICULE DE BREVET EUROPEEN

(11) **EP 1 799 960 B2**
(45) Date de publication et mention de la décision concernant l'opposition: **28.11.2018**
(45) Mention de la délivrance du brevet: 16.11.2011
(21) Numéro de dépôt: 05798598.8
(22) Date de dépôt: 22.08.2005
(51) Int. Cl.: C09K 8/508, C09K 8/512, C09K 8/575

(54) **METHODE DE TRAITEMENT DE FORMATIONS OU DE CAVITES SOUTERRAINES PAR DES MICROGELS**
VERFAHREN ZUR BEHANDLUNG VON UNTERIRDISCHEN FORMATIONEN ODER HOHLRÄUMEN MIT MIKROGELEN
METHOD FOR TREATING UNDERGROUND FORMATIONS OR CAVITIES WITH MICROGELS

(30) Priorité: 25.08.2004 FR 0409100
(43) Date de publication de la demande: 27.06.2007
(73) Titulaire: IFP Energies nouvelles, 92500 Rueil-Malmaison (FR); SOCIETE D'EXPLOITATION DE PRODUITS POUR LES INDUSTRIES CHIMIQUES-SEPPIC, 75321 Paris Cedex 07 (FR)
(72) Inventeur: TABARY, René, F-78100 Saint-Germain-en-Laye (FR); CHAUVETEAU, Guy, F-92000 Nanterre (FR); MALLO, Paul, F-78290 Croissy-sur-Seine (FR); BRAUN, Olivier, F-81710 Naves (FR); VILAIN, Eric, F-92210 Saint-Cloud (FR); ZAITOUN, Alain, F-75008 Paris (FR)
(74) Mandataire: Cabinet Plasseraud
(86) Numéro de dépôt international: PCT/FR2005/002124
(87) Numéro de publication internationale: WO 2006/024795

(56) Documents cités:
- EP-A- 1 086 976
- WO-A-99/36445
- FR-A- 2 565 623
- US-A- 4 182 417
- US-A- 4 681 912
- US-B2- 6 729 402

## Description

La présente invention concerne une méthode d'utilisation de microgels obtenus à partir de latex eau dans huile, ou de polymère réticulés sous forme de poudre, et leur domaine d'application en tant qu'agents épaississants et/ou agents sélectifs de réduction de perméabilité dans le domaine de l'industrie du pétrole, notamment de la Prévention des Venues d'Eau, du Contrôle de Profils, de la Récupération Assistée du Pétrole par injection de produits viscosifiant.

Différents produits ou procédés existent et sont déjà utilisés pour ces différents usages. On connaît en particulier dans le domaine de la Prévention des Venues d'Eau, les traitements mettant en oeuvre des polymères mais ceux-ci restent limités à des perméabilités de zones productrices d'eau relativement peu élevées (en moyenne inférieures à 300 milliDarcy) à cause de la limitation en taille de ces polymères.

Les procédés de Prévention de Venues d'Eau à base de gels de polymère proposés dans l'industrie pétrolière sont actuellement peu fiables et utilisent souvent des produits polluants à base de sels de chrome ou de résines. Les procédés aujourd'hui sur le marché mettent le plus souvent en oeuvre des gels colmatants ou des gels dilués (faible concentration en polymère et en réticulant, Colloïdal Dispersion Gels), les résultats restent aléatoires principalement à cause des problèmes tels que :
- l'absence de contrôle de la cinétique de gélification lié à la variabilité des paramètres physico-chimiques et hydrodynamiques entre la surface et la formation, entraînant le risque d'une inefficacité du traitement (absence de gélification) ou à l'inverse le risque d'un endommagement irrémédiable du puits (prise en masse du gel),
- la rétention et l'adsorption de l'agent réticulant sur la roche réservoir,
- le non-contrôle des caractéristiques du gel formé, de son placement et de sa propagation ainsi que de ses propriétés de sélectivité eau/huile.

D'autre part, le nombre grandissant de champs matures, le développement des puits complexes (puits horizontaux, sous-marins, multi-branches) et les problèmes de fiabilité des techniques de séparation de fonds ont fait augmenter considérablement l'intérêt des pétroliers pour les traitements auto-sélectifs de Prévention de Venues d'Eau pouvant être injectés directement (injection de type "bullhead") dans la formation réservoir, c'est à dire sans isolation de zone par des équipements spécifiques.

Dans le cas d'un traitement de puits producteurs par injection de polymère, le mécanisme primaire repose sur une adsorption des molécules de polymère sur le minéral constituant la couche balayée par le polymère. Après le traitement, lorsque le puits est remis en production, les molécules adsorbées de manière quasi-irréversible à la paroi offrent un maximum de résistance à l'écoulement de l'eau qui circule principalement au voisinage de cette paroi et réduisent ainsi sa mobilité. En présence d'une phase hydrocarbonée (huile ou gaz), la pression capillaire exercée par le fluide constituant cette phase suffit à écraser les molécules adsorbées sur la paroi des restrictions de pore et ainsi à ne pas entraver sa mobilité. Les molécules, déformables, dans leur état "compressé" ont la capacité de se gonfler en présence d'une phase d'eau et de réduire ainsi sa mobilité. Ce type de produit conférant une réduction sélective de perméabilité entre l'eau, l'huile ou le gaz est appelé "Relative Permeability Modifier", il implique ainsi une réduction de la perméabilité à l'eau dans les drains de plus forte perméabilité favorisant ainsi:
1) une amélioration de la production (diminution du Water Oil Ratio ou du Gas Oil ratio),
2) un balayage plus efficace des couches de plus faible perméabilité, en général celles qui contiennent de l'huile encore mobilisable,
3) une diversion de l'eau vers les zones moins perméables et donc les moins bien balayées dans les procédés de drainage par injection d'eau (correction de profil dans les puits injecteurs).

Un procédé de fabrication de microgels est décrit dans le document EP-10B6976. Il est basé sur la gélification réalisée sous cisaillement d'un mélange de polymère et de réticulant. Selon la méthode, on injecte dans un milieu poreux et perméable une composition gélifiante comprenant un polymère et un additif de réticulation du polymère et on recueille à la sortie du milieu une solution de microgels de taille sensiblement constante et mono disperse.

La demanderesse s'est donc intéressée à des espèces chimiques faciles à mettre en solution, stables c'est à dire présentant un caractère répulsif (absence d'interactions), et de taille contrôlée.

La présente demande concerne une méthode de mise en oeuvre de microgels de type chimique, de taille contrôlée et stables, optimisés en fonction des caractéristiques de réservoir pour lequel l'application est désirée.

Les avantages de cette invention réside principalement dans le fait que:
a) la taille des microgels est notablement plus grande (de 1 à 10 fois) que la taille d'un polymère de haut poids moléculaire du commerce;
b) la taille des microgels peut être dimensionnée en fonction de la perméabilité moyenne de la couche, ou de la zone de réservoir, par laquelle l'eau est produite en plus grande quantité, généralement des zones de perméabilité de 0,001 à quelques Darcy (1 Darcy=0,98693 µm²).

Dans la présente invention, la demanderesse a recherché des microgels ayant les propriétés suivantes:
- déformables,
- stables en solution,
- stables vis à vis des électrolytes,
- stables en température,
- stables mécaniquement, c'est à dire lorsqu'il sont soumis à un fort cisaillement,
- pouvant s'adsorber de manière irréversible,

La capacité des microgels selon l'invention, à satisfaire sur le plus large domaine, l'ensemble de ces conditions permet de disposer d'un nouveau procédé beaucoup plus fiable par rapport à ceux existant actuellement sur le marché.

Selon l'invention, les microgels sont non toxiques, sans résidus nocifs, permettant ainsi de satisfaire l'évolution de la réglementation européenne sur les substances dangereuses et les normes concernant les rejets.

Ainsi, la présente invention concerne une méthode de traitement de formations dans laquelle on effectue les étapes suivantes:
- on prépare une composition comportant des microgels en mélangeant dans un solvant sous agitation, une quantité représentant de 0,01% à 60% massique de ladite composition de :
   ou bien un latex inverse consistant en une phase huile, une phase aqueuse, au moins un agent émulsionnant de type eau dans huile (E/H), au moins un agent émulsionnant de type huile dans eau (H/E), de 20% à 60% en poids, et de préférence de 25% à 45% en poids d'un polyélectrolyte anionique réticulé à base d'au moins un monomère à fonction acide fort copolymérisé avec au moins un monomère neutre,
   ou bien d'un polymère en poudre obtenu par distillation azéotropique, atomisation ou précipitation dudit latex inverse,
- on injecte ladite composition dans la formation poreuse et perméable dans laquelle s'écoulent de l'eau et/ou de l'huile et/ou du gaz, de manière à réduire sélectivement la perméabilité à l'eau et/ou de réduire les venues de sédiments grâce à l'adsorption des microgels dans la formation.

Le solvant est de préférence de l'eau plus ou moins salée, mais peut aussi être une phase organique, telle une huile. Bien entendu, le solvant peut aussi être un mélange aqueux et organique.

Dans la définition du polyélectrolyte contenu dans le latex inverse tel que défini ci-dessus :
- l'agent de réticulation est de préférence choisi parmi le diméthacrylate d'éthylèneglycol, le diacrylate de diéthylèneglycol, le diallyloxyacétate de sodium, le diacrylate d'éthylèneglycol, le diallyl urée, le triallylamine, le triméthylol propanetriacrylate ou le méthylène-bis-(acrylamide) ou un composé de type organométallique choisi dans la colonne IV du tableau de Mendeleïev (Ti, Zr, Hf, Th) ;
- la fonction acide fort des monomères en comportant peut être notamment la fonction acide sulfonique ou la fonction acide phosphonique. Lesdits monomères peuvent être par exemple l'acide styrènesulfonique partiellement ou totalement salifié ou, de préférence, l'acide 2-méthyl 2-[(1-oxo 2-propènyl) amino] 1-propanesulfonique (dénommé aussi acide 2-acrylamido 2-méthyl propanesulfonique) partiellement ou totalement salifiée ;
- les monomères neutres peuvent être notamment choisis parmi l'acrylamide, le méthacrylamide, le diacétoneacrylamide, le diméthylacrylamide, le N-isopropyl acrylamide, l'acrylate de (2-hydroxy éthyle), l'acrylate de (2,3-dihydroxy propyle), le méthacrylate de (2-hydroxy éthyle), le méthacrylate de (2,3-dihydroxy propyle), un dérivé éthoxylé de poids moléculaire compris entre 400 et 1000, de chacun de ces esters ou le vinyl pyrrolidone ;
- Pour les monomères à fonction acide fort, le terme salifié indique plus particulièrement les sels de métaux alcalins tels que les sels de sodium ou de potassium, les sels de bases azotées comme le sel d'ammonium ou le sel de monoéthanolamine (HO-CH₂-CH₂-NH₄⁺).
- L'agent émulsionnant de type eau dans huile (E/H) peut être constitué soit d'un seul tensioactif soit d'un mélange de tensioactifs à condition que ledit mélange ait une valeur de HLB suffisamment faible pour induire des émulsions eau dans huile. Comme agent émulsionnant de type eau - dans huile, il peut y avoir par exemple les esters de sorbitan, comme l'oléate de sorbitan, comme celui commercialisé par la société SEPPIC sous le nom MONTANE™ 80, l'isostéarate de sorbitan, comme celui commercialisé par la société SEPPIC sous le nom MONTANE™ 70 ou le sesquioléate de sorbitan comme celui commercialisé par la société SEPPIC sous le nom MONTANE™ 83. Il peut y avoir aussi certains esters de sorbitan polyéthoxylés, par exemple le monooléate de sorbitan pentaéthoxylé comme celui commercialisé par la société SEPPIC sous le nom MONTANOX™ 81 ou l'isostéarate de sorbitan pentaéthoxylé comme celui commercialisé sous le nom MONTANOX™ 71 par la société SEPPIC. Il peut y avoir encore l'alcool oléocétylique diéthoxylé comme celui commercialisé sous le nom SIMULSOL™ OC 72 par la société SEPPIC, les polyesters de poids moléculaire compris entre 1000 et 3000, produits de la condensation entre un acide poly (iosbutènyl) succinique ou son anhydride et un polyéthylène glycol, tels que l'HYPERMER™ 2296 commercialisé par la société UNIQEMA, ou enfin les copolymères blocks de poids moléculaire compris entre 2500 et 3500, comme l'HYPERMER™ B246 commercialisé par la société UNIQEMA, ou le SIMALINE™ IE 200commercialisé par la société SEPPIC.
- par agent émulsifiant du type "huile dans eau", on désigne des agents émulsifiants possédant une valeur de HLB suffisamment élevée pour fournir des émulsions huile dans l'eau tels que les esters de sorbitan éthoxylés comme l'oléate de sorbitan polyéthoxylé avec 20 moles d'oxyde d'éthylène , commercialisé par la société SEPPIC sous le nom de MONTANOX™ 80, le laurate de sorbitan polyéthoxylé avec 20 moles d'oxyde d'éthylène , commercialisé par la société SEPPIC sous le nom de MONTANOX™ 20, l'huile de ricin polyéthoxylé avec 40 moles d'oxyde d'éthylène commercialisé sous le nom SIMULSOL™ OL50, l'alcool oléodécylique décaéthoxylé, commercialisé par la société SEPPIC sous le nom SIMULSOL™ OC 710, l'alcool laurique heptaéthoxylé commercialisé sous le nom SIMULSOL™ P7, le nonylphénol décaéthoxylé commercialisé sous le nom de SYNPERONIC™ NP-10 ou les hexaoléates de sorbitan polyéthoxylés commercialisés par la société UNIQEMA sous les nom G-1086 et G-1096 ;
- la phase huile peut être constituée soit par une huile minérale commerciale contenant des hydrocarbures saturés comme les paraffines, les isoparaffines, les cycloparaffines, présentant à température ambiante, une densité entre 0,7 et 0,9 et un point d'ébullition supérieur à environ 180°C, telle que par exemple le MARCOL™ 52 commercialisés par EXXON CHEMICAL, l'EXXSOL D100, ou l'ISOPAR M, soit par une huile de synthèse, soit par une huile végétale ou tout mélange de ces huiles.

La présente invention sera mieux comprise, et ses avantages apparaîtront plus clairement à la lecture de la description qui suit d'exemples de réalisation, nullement limitatifs.

Les polymères réticulés utilisés selon l'invention, sont fabriqués par la société SEPPIC (France) peuvent se présenter sous les formes décrites ci-après.

Le principe de la fabrication des latex inverses est décrit dans les documents US-6197287, EP-1047716, US-6375959, EP-1010708, WO-9942521, il consiste en la préparation d'une phase aqueuse contenant entre autres les monomères, par exemple de l'acrylamide et du 2-acrylamido-2-méthyl propane sulfonate de sodium (AMPSNa), au moins un agent réticulant et optionnellement divers additifs technologiques tels que: agent limiteur de chaîne, agent complexant d'espèces métalliques, d'une phase organique contenant entre autres l'huile et un ou plusieurs agent émulsifiant. La phase aqueuse est introduite dans la phase organique sous agitation puis soumise à l'action d'un cisaillement important à l'aide d'un appareil de type Ultra Turrax ou Silverson. L'émulsion obtenue est ensuite soumise à un barbotage d'azote, puis la réaction de polymérisation est amorcée en présence d'un agent initiateur de radicaux libres. Après polymérisation, l'agent émulsifiant de type huile dans l'eau est ajouté.

La composition selon l'application destinée notamment à la prévention des venues d'eau, au contrôle de profils, au balayage des réservoirs (Chemical Flooding), à la consolidation des sables, à l'étanchéification de remblais, à l'abandon de zones, etc..., peut comporter un ajout d'un agent réticulant permettant de réticuler les microgels entre eux.

Par polymère réticulé est désigné un polymère non linéaire se présentant à l'état de réseau tridimensionnel, gonflable en présence d'eau et appelé microgel.

L'agent de réticulation est généralement utilisé dans la proportion molaire exprimée par rapport aux monomères mis en oeuvre, de 0,002% à 0,5%, et de préférence de 0,002% à 0,25%. Ce faible taux de réticulation permet de conférer les propriétés visco-élastiques adéquates aux microgels et notamment une capacité de déformation importante. Ce type de microgels est qualifié de "déformable" ("soft microgels") par opposition à des microgels à fort degré de réticulation qui se rapprochent de sphères dures. Ces microgels présentant un degré élevé de capacité de déformation en font de potentiels bons agents RPM ("Relative Permeability Modifiers") dans la mesure où ils offrent peu ou pas de résistance à l'huile.

Ces microgels, compte tenu de leurs caractéristiques rhéologiques ne sont bien évidemment pas adaptés à bloquer les espaces interstitiels entre les solides des formations souterraines.

Les latex inverses contiennent entre 10% et 90% d'eau. La phase huile de la composition représente de 10% à 90%, de préférence de 20% à 25% du poids total de la composition.

Les latex contiennent généralement de 2,5% à 15% en poids, et de préférence de 4% à 9% en poids d'agents émulsionnants tels que définis précédemment , parmi lesquels de 20% à 50% du poids total des agents émulsionnants présents sont du type eau dans huile (E/H) et dans laquelle de 80% à 50% du poids total des agents émulsifiants sont du type huile dans eau (H/E).

Les microgels ou latex peuvent également contenir divers additifs tels que des agents complexant, des agents de transfert, ou des agents de limitation de longueur de chaîne.

Les polymères réticulés sous la forme de poudre peuvent être, lors de la phase de précipitation, débarrassés de ces différents additifs susmentionnés.

La présente demande s'adresse principalement au traitement de puits producteurs à huile ou à gaz, ou de puits de stockage de gaz ou plus généralement au traitement de formations rocheuses. Le traitement de ce type de puits s'opère sur une distance limitée autour d'un puits (quelques mètres), il concerne la prévention des venues d'eau, la prévention des venues de gaz. Il pourra également concerner d'autres domaines similaires, tels que le contrôle de profils, la récupération assistée par balayage (Chemical Flooding) à partir de puits injecteurs, la consolidation des sables, les traitements d'étanchéification (puits de mines), ou l'abandon de zones.

Les traitements de Prévention des Venues d'Eau peuvent être réalisées en mettant en oeuvre des agents colmatants (ciments, résines), des moyens mécaniques (packers) ou des traitements à base de polymères. La mise en place d'un packer ou d'un bouchon de ciment nécessite la connaissance précise de la zone par laquelle s'opère la venue d'eau, elle impose un type de complétion adapté à une injection sélective, la technique nécessite des travaux de "workover" et est donc coûteuse. Les techniques d'injection de polymères de type "bullhead", c'est à dire sans isolation de zone, sont plus séduisantes car elles sont beaucoup plus simples à mettre en oeuvre et sont surtout moins coûteuses.

Un avantage du procédé mettant en oeuvre les formulations de la présente demande réside dans le fait qu'il peut être appliqué à des formations sans devoir isoler ou protéger la ou les zones productrices d'hydrocarbure durant la phase d'injection de la formulation.

La composition comportant les microgels est destinée à être injectée dans des formations où les zones à eau ont des perméabilités notablement plus grandes que les zones à huile, ainsi ces microgels auront une propension à envahir les zones de perméabilité les plus élevées, c'est à dire, dans la plus grande majorité des cas, les zones à eau. En effet, il serait préjudiciable de mettre en oeuvre une injection de microgels dans des formations où:
- la perméabilité des zones à huile est plus grande que celle des zones à eau;
- la pression dans les zones à huile est plus faible que dans les zones à eau, et pourrait ainsi induire une diminution en terme de production d'huile, voire conduire à un abandon du puits.

Un avantage du procédé mettant en oeuvre la présente demande concerne le fait que les microgels injectés, de taille notablement plus grosse que la taille des polymères couramment injectés (seuls ou en présence d'agents gélifiant) vont pénétrer à très courte distance dans les zones de faible perméabilité. Cette propriété est due au fait de la conjugaison de leur dimension importante (taille micronique) et de l'épaisseur importante de la couche adsorbée (mono couche) liée à leur adsorption.

Dans le cas de microgels de 1,5 µm, la réduction de perméabilité à l'eau est de l'ordre de 20 dans un grès de Béréa de 200 millidarcy et devrait être beaucoup plus importante dans le cas de perméabilités plus faibles. Ainsi, les distances de pénétration dans un modèle de type bicouche de perméabilité 200 mD et 1000 mD seraient dans un rapport 1:100.

Un autre avantage des microgels réside dans le fait qu'ils sont injectés en régime dilué, favorisant ainsi un placement sélectif dans les zones de plus forte perméabilité, en général, les zones par lesquelles l'eau est principalement produite.

A la suite du traitement opéré avec les microgels, lorsque le puits est remis en production, une réduction de la perméabilité à l'huile ou au gaz peut cependant intervenir dans la zone hydrocarbonée. Cependant, une fois que le fluide injecté (solution de microgels) est reproduit, celui-ci est remplacé par l'hydrocarbure. Du fait de la seule pression capillaire, les microgels qui sont de nature déformable, sont alors compressés à la paroi des restrictions de pore permettant ainsi à la phase hydrocarbonée de s'écouler vers le puits producteur sans altération de sa perméabilité relative.

Lorsque le polymère réticulé est utilisé sous forme de latex inverse, il peut être mis en oeuvre non dilué, ou dilué dans de l'huile, ou préférentiellement dans de l'eau dans une proportion pondérale supérieure à 0,01%. Lorsque le polymère réticulé est utilisé sous forme de poudre, il peut être dilué dans de l'eau dans une proportion pondérale comprise entre 0,01 et 60%.

La mise en solution des microgels selon l'invention est beaucoup plus rapide que les poudres de polymères conventionnels. La dilution de la solution commerciale sera réalisée dans une eau de préférence de salinité modérée, de préférence entre 0% et 2% TDS (Total Dissolved Salt, ou sel dissout total), et se fera de préférence sous un cisaillement assez intense afin de parfaitement briser l'émulsion. Cette eau pourra être de l'eau de production ou un mélange d'eau de production et d'eau plus douce (eau de rivière, eau du robinet, ...) ou tout autre type d'eau (eau de rivière, eau du robinet, eau de mer, eau synthétique,...) afin de satisfaire aux recommandations concernant la salinité pour une mise en solution optimisée.

On peut avantageusement injecter les microgels sous la forme de latex inverse soit purs, soit dilués dans une phase organique (diesel, huile minérale). Ce mode d'injection est particulièrement approprié pour des formations sensibles à l'injection d'eau du fait d'une déstabilisation de la roche ou d'une perméabilité faible provoquant des pertes notables de la perméabilité de l'huile ou du gaz induites par un accroissement de la saturation en eau dans la zone balayée. L'injection du latex inverse en phase hydrocarbonée peut se faire à des concentrations comprises entre 0,1 et 90%.

Les microgels synthétisés en émulsion peuvent ensuite être isolés sous la forme de poudre. Ils peuvent ensuite être remis en solution en recouvrant les mêmes propriétés. Les microgels sous la forme de poudre sont mis en solution également sous un cisaillement assez intense au moment de l'introduction de la poudre dans une eau de même type que celui mentionné concernant l'émulsion, puis sous une agitation plus modérée durant la phase de maturation.

Le pH d'utilisation de la présente composition se situera dans un domaine entre 4 et 11, de préférence entre 5 et 9.

Selon le type de puits, il pourra être judicieux d'injecter un premier fluide ou "préflush" (eau, polymère seul, fluide de diversion, ...) avant d'injecter la solution de microgels.

Le domaine d'utilisation de la présente demande s'adresse à des réservoirs dont la température est comprise entre 20°C et 200°C, de préférence entre 20°C et 150°C.

Le domaine d'utilisation de la présente demande s'adresse à des réservoirs dont la salinité est comprise entre 0,1 g/l et 350 g/l TDS, de préférence entre 0,1 g/l et 100 g/l TDS.

La présente demande a enfin ainsi pour objet une formulation de microgels à destination de l'industrie du pétrole et du traitement des puits tels que définis précédemment, les puits pouvant être des puits verticaux, horizontaux ou des puits à architecture complexe. Les puits peuvent être en trous ouverts ou complétés en "gravel pack", trous tubés perforés, crépines, ...

Les microgels peuvent avantageusement être optimisés en fonction des caractéristiques de la formation à traiter.

Le résultat attendu de la mise en oeuvre de solutions de microgels est d'augmenter la proportion de la production de la phase hydrocarbonée (huile ou gaz) par rapport à celle de la phase aqueuse (eau) et ainsi de réduire les coûts de gestion de l'eau produite. Un autre avantage concerne le fait que le débit de production du puits peut être augmenté du fait de l'allègement de la colonne hydrostatique induite par la réduction de la fraction d'eau dans la production du puits.

Dans le cas de formation contenant des sables ou particules fines mobiles, l'adsorption des microgels selon l'invention favorise la retenue de ces particules et donc ralenti, ou élimine, les venues de sables, ou phénomènes équivalents, dans les drain forés dans la formation.

Des remblais de sols sont avantageusement stabilisés et étanchéifiés (au moins forte réduction de perméabilité) par l'injection de la composition liquide selon l'invention.

Les exemples suivants ont pour but d'illustrer la présente invention, sans toutefois la limiter.

### Exemple 1 :

### Préparation d'un latex inverse de copolymère AMPS-AM partiellement, ou totalement salifié, sous forme de sel de sodium, réticulé au triallylamine (AMPS/AM=5/95):

On charge dans un bêcher, sous agitation :
- 350 g d'eau permutée,
- 69,2 g d'une solution commerciale à 55% en poids du sel de l'acide 2-méthyl-2-[(1-oxo-2-propènyl)amino]-1-propanesulfonique (AMPS),
- 236,1 g d'acrylamide (AM),
- 0,45 g d'une solution commerciale à 40% de diéthylène triamine pentacétate de sodium, et
- 0,36 g de triallylamine.

Le pH de la phase aqueuse précédemment décrite est ajusté à 3,5 et la quantité de phase aqueuse est complétée jusqu'à concurrence de 680 g par ajout d'eau permutée.

Parallèlement, on prépare une phase organique en introduisant dans un bêcher agité successivement :
- 220 g d'EXXSOL™ D100,
- 27,5 g de MONTANE™ 80 VG (oléate de sorbitan commercialisé par la société SEPPIC)
- et 0,1 g de azo-bis-isobutyronitrile.

La phase aqueuse est introduite progressivement dans la phase organique puis soumise à une agitation mécanique violente au moyen d'un appareil de type Ultra-Turrax™ commercialisé par la société IKA.

L'émulsion obtenue est alors transférée dans un réacteur de polymérisation. L'émulsion est soumise à un barbotage d'azote important de manière à éliminer l'oxygène et refroidie à environ 8-10°C.

On introduit alors 5 ml d'une solution contenant 0,42% (en poids) d'hydroperoxyde de cumène dans l'isohexadécane.

Après un temps suffisant pour une bonne homogénéisation de la solution, on introduit alors une solution aqueuse de métabisulfite de sodium (0,2 g dans 100 ml d'eau) à raison de 0,5 ml/minute. L'introduction est réalisée pendant environ 60 minutes.

Pendant cette introduction, on laisse monter la température dans le réacteur de polymérisation jusqu'à la température finale de polymérisation. On maintient alors le milieu réactionnel pendant environ 90 minutes à cette température. L'ensemble est refroidi jusqu'à une température d'environ 35°C et on introduit lentement 35 g d'alcool laurique heptaéthoxylé (7 OE).

On filtre et on recueille le latex inverse ainsi obtenu.

### Exemple 2:

### Préparation d'un latex inverse de copolymère AMPS-AM, partiellement ou totalement salifié, sous forme de sel de sodium, réticulé au triallylamine (AMPS/AM=15/85)

On charge dans un bêcher, sous agitation :
- 270 g d'eau permutée,
- 218,6 g d'une solution commerciale à 55% en poids du sel de l'acide 2-méthyl-2-[(1-oxo-2-propènyl)amino]-1-propanesulfonique
- 181,0 g d'acrylamide,
- 0,45 g d'une solution commerciale à 40% de diéthylène triamine pentacétate de sodium, et
- 0,36 g de triallylamine,

Le pH de la phase aqueuse précédemment décrit est ajusté à 3,5 et la quantité de phase aqueuse est complétée jusqu'à concurrence de 680 g par ajout d'eau permutée.

Parallèlement, on prépare une phase organique en introduisant dans un bêcher agité successivement :
- 220 g d'EXXSOL™ D100,
- 27,5 g de MONTANE™ 80 VG (oléate de sorbitan commercialisé par SEPPIC) et
- 0,1 g de azo-bis-isobutyronitrile.

La phase aqueuse est introduite progressivement dans la phase organique puis soumise à une agitation mécanique violente au moyen d'un appareil de type Ultra-Turrax™ commercialisé par IKA.

L'émulsion obtenue est alors transférée dans un réacteur de polymérisation. L'émulsion est soumise à un barbotage d'azote important de manière à éliminer l'oxygène et refroidie à environ 8-10°C.

On introduit alors 5 ml d'une solution contenant 0,42% (en poids) d'hydroperoxyde de cumène dans l'isohexadécane.

Après un temps suffisant pour une bonne homogénéisation de la solution, on introduit alors une solution aqueuse de métabisulfite de sodium (0,2 g dans 100 ml d'eau) à raison de 0,5 ml/minute. L'introduction est réalisée pendant environ 60 minutes.

Pendant cette introduction, on laisse monter la température dans le réacteur de polymérisation jusqu'à la température finale de polymérisation. On maintient alors le milieu réactionnel pendant environ 90 minutes à cette température. L'ensemble est refroidi jusqu'à une température d'environ 35°C et on introduit lentement 35 g d'alcool laurique heptaéthoxylé (7 OE). On filtre et on recueille le latex inverse ainsi obtenu.

### Exemple 3 :

### Préparation d'un latex inverse de copolymère (AMPS/AM=40/60) réticulé au triallylamine

(i) - On prépare une phase organique en introduisant sous agitation 27,5 g de MONTANE™ 80 (oléate de sorbitan) dans 220 g d'EXXSOL™ D100, puis en ajoutant 0,1 g d'azo-bis(isobutyronitrile);
(ii) - On prépare une phase aqueuse en mélangeant sous agitation :
   - 50 g d'eau,
   - 127,8 g d'acrylamide (AM),
   - 496,1 g d'une solution commerciale à 55% du sel de sodium de l'acide 2-acrylamido-2-méthylpropanesuffonique (AMPS),
   - 0,31 g de triallylamine,
   - 0,45 g d'une solution commerciale à 40% de diéthylènetriamine pentaacétate de sodium.

   On ajuste le pH de la phase aqueuse à 5,3 en ajoutant la quantité requise d'acide 2-acrylamido-2-méthylpropanesulfonique (environ 3 g). La quantité totale de phase aqueuse est alors ajustée à 680 g par ajout d'eau.
(iii) - La phase aqueuse est ensuite dispersée sous agitation dans la phase huile puis l'ensemble est soumis à l'action d'un cisaillement important à l'aide d'une turbine de type Ultra-Turrax™ ou Silverson™. L'émulsion inverse ainsi obtenue est alors soumise à un barbotage d'azote de manière à enlever l'oxygène dissout.
(iv) - Après avoir refroidi l'émulsion inverse à environ 8-10°C, on initie la réaction de polymérisation par ajoût d'un couple oxydo-réducteur: Hydroperoxyde de cumène/métabisulfite de sodium. La température s'élève jusqu'à environ 80°C et on laisse ensuite la réaction de polymérisation se poursuivre jusqu'à l'obtention d'un palier de température indiquant la fin de celle-ci.
(v) - On maintient alors le milieu réactionnel à cette température de manière à éliminer les monomères résiduels. Puis on ajoute à environ 35°C, 35 g de SIMULSOL™ P7 (alcool laurique heptaéthoxylé). On filtre et on recueille le latex inverse souhaité obtenu.

### Exemple 4 :

### Préparation d'un latex inverse de copolymère (AM-AA=80/20) partiellement salifié sous forme de sel de sodium réticulé au méthylène bis(acrylamide)

(i) - On prépare une phase organique en introduisant sous agitation 27,5 g de Montane™ 80 dans 220 g d'EXXSOL™ D100 et en y ajoutant 0,1 g d'azo-bis(isobutyronitrile).
(ii) - On prépare une phase aqueuse en introduisant :
   - 350 g d'eau,
   - 199,0 g d'acrylamide (AM),
   - 50,0 g d'acide acrylique (AA),
   - 40 g d'une solution d'hydroxyde de sodium à 50%,
   - 0,027 g de methylene- bis- acrylamide,
   - 0,45 g d'une solution commerciale à 40% de diéthylène triamine pentaacétate de sodium.

   On ajuste le pH de la phase aqueuse à 5,2 en ajoutant la quantité requise d'acide acrylique ou de soude. La quantité totale de phase aqueuse est alors ajustée à 680 g par ajout d'eau.
(iii) - La phase aqueuse est ensuite dispersée sous agitation dans la phase huile puis l'ensemble est soumis à l'action d'un cisaillement important à l'aide d'une turbine de type Ultra-Turrax™. ou Silverson™. L'émulsion inverse ainsi obtenue est alors soumise à un barbotage d'azote de manière à enlever l'oxygène dissout.
(iv) - Après avoir refroidi l'émulsion inverse à environ 8-10°C, on initie la réaction de polymérisation par ajoût d'un couple oxydo-réducteur: Hydroperoxyde de cumène/métabisulfite de sodium. La température s'élève jusqu'à environ 80°C et on laisse ensuite la réaction de polymérisation se poursuivre jusqu'à l'obtention d'un palier de température indiquant la fin de celle-ci.
(v) - On maintient alors le milieu réactionnel à cette température de manière à éliminer les monomères résiduels. Puis on ajoute à environ 35°C, 35 g de SIMULSOL™ P7 (alcool laurique heptaéthoxylé). On filtre et on recueille le latex inverse souhaité obtenu.

### Exemple 5 :

### Préparation d'un latex inverse de copolymère (AM-AA=80/20) partiellement salifié sous forme de sel de sodium réticulé au méthylène bis(acrylamide)

On opère comme à l'Exemple 4, mais en utilisant deux fois plus de méthylene-bis(acrylamide), soit 0,054 g, et on obtient le latex inverse attendu.

### Evaluation des propriétés des microgels à partir du latex inverse préparé selon l'Exemple 3

### 1 : Mesure de viscosités

On a préparé des microgels de différentes concentrations du latex inverse préparé comme selon l'Exemple 3, dans une eau contenant 2% de NaCl.

Le tableau suivant donne les viscosités obtenues à 30°C (en mPa.s) aux différentes concentrations C dans l'eau (Rhéomètre Low Shear, vitesse de cisaillement égale à 1 et à 100 s⁻¹) :

| | **C** | **Viscosités des émulsions (mPas)** | |
|---|---|---|---|
| | | **Vitesse de cisaillement: 1 s⁻¹** | **Vitesse de cisaillement: 100** s⁻¹ |
| **Concentration en latex inverse (% massique)** | **0,3** | 3 | 2,8 |
| | **0,5** | 17 | 12 |
| | **0,6** | 30 | 20 |
| | **0,77** | 80 | 40 |

### 2 : Tests sur carbure de Silicium

L'évaluation des performances des microgels en milieu poreux est réalisée sur des milieux de type carbure de Silicium se présentant sous la forme de poudre relativement mono disperse, commercialisés avec différentes granulométries. Ce matériau une fois tassé, permet d'obtenir une bonne reproductibilité des massifs en terme de structure poreuse et de perméabilité de l'échantillon pour une taille de grains donnée. Il constitue donc un bon milieu poreux modèle.

La poudre de carbure de silicium est tassée dans une colonne munie de deux embouts. Sa perméabilité k initiale est déterminée à l'eau. Les fluides (eau, solution de microgels, eau d'élution, huile, ...) sont injectés dans le milieu poreux à débit constant. La perte de charge est déterminée aux bornes du massif et enregistrée tout au long de l'injection.

La bonne propagation des microgels (contrôlée par une mesure de la viscosité en ligne) est vérifiée dans les milieux dont la dimension des restrictions de pore est au moins supérieure à 3 fois la taille des microgels.

Les réductions de perméabilité à l'eau ou à l'huile sont déterminées par l'injection alternée de ces deux fluides à la suite de l'injection de la solution de microgels. La réduction de perméabilité à l'eau permet, connaissant la dimension de pore du milieu poreux, d'évaluer l'épaisseur de la couche de microgels adsorbée et ainsi de déterminer la taille des microgels sous leur forme adsorbée.

On constate une réduction sélective de perméabilité avec une réduction de la perméabilité à l'eau (Rkw), sans réduction notable de la perméabilité à l'huile (Rko) (K perméabilité en Darcy, ε_{H} épaisseur de couche adsorbée, en micromètre).

Conditions expérimentales : Température T=30°C, eau+2% de NaCl (viscosité 0,85 mPa.s), huile Marcol 52 (viscosité 8,6 mPa.s), concentration en microgels 0,1 %.

| | K (darcy) | Rkw | Rko | ε_{H} (µm) |
|---|---|---|---|---|
| SiC 50 µm | 1,1 | 4,5 | 1,3 | 1,5 |
| SiC 80 µm | 2,8 | 2,1 | 1 à 1,5 | 1,4 |

### 3 : Tests sur grès de Béréa (conditions identiques à celles de précédent test)

| | K (darcy) | Rkw | Rko | ε_{H} (µm) |
|---|---|---|---|---|
| Grès de Béréa | 0.2 | 20 | 1,2 | 1,5 |

### 4 : Détermination de la taille des microgels par la Méthode par diffusion de lumière (Diffusion statique et dynamique, appelée également Spectroscopie par Corrélation de Photons).

La taille déterminée est de l'ordre de 2 µm (concentration en microgels de 0,1%) et confirme les valeurs obtenues lors de l'injection dans les massifs de carbure de silicium, et d'après l'évaluation de l'adsorption.

### 5 : Stabilité thermique

Un test de maintien à 150°C en conditions pseudo-anaérobie pendant une durée de 3 mois sans perte de viscosité a mis en évidence que, comparés à des polymères classiques non réticulés, les microgels obtenus à partir des latex inverse selon l'invention restaient plus stables. Cette propriété s'explique par la présence de points de réticulation.

Conditions expérimentales: eau+2% NaCl, concentration en microgels 0,3%.

### 6 : Stabilité mécanique

Les microgels sont robustes d'un point de vue mécanique et résistent à des contraintes de cisaillement élevées. En effet, on ne constate aucune perte de viscosité après un cisaillement à 10000 tours/min (Ultra Turrax™) pendant 10 minutes.

Conditions expérimentales: eau+2% NaCl, température ambiante, concentration en microgels entre 0,04% et 3%.

### 7 : Stabilité aux électrolytes

Les microgels sont quasi-insensibles à la salinité dans un domaine de 20 à 200 g/l TDS, en présence ou non d'ions bivalents.

Conditions expérimentales: température ambiante, concentration en microgels 0,01%.

### 8: Stabilité au pH

Les microgels sont quasi-insensibles au pH dans un domaine entre 4 et 11.

Conditions expérimentales: température ambiante, concentration en microgels 0,01 %.

## Revendications

1. Méthode de traitement de formations rocheuses dans laquelle on effectue les étapes suivantes:
- on prépare une composition liquide comportant des microgels en mélangeant dans un solvant sous agitation, une quantité représentant de 0,01 % à 60% massique de ladite composition d'un polymère réticulé sous forme
o d'un latex inverse consistant en une phase huile, une phase aqueuse, au moins un agent émulsionnant de type eau dans huile (E/H), au moins un agent émulsionnant de type huile dans eau (H/E), de 20% à 60% en poids, et de préférence de 25% à 45% en poids d'un polyélectrolyte anionique réticulé à base d'au moins un monomère à fonction acide fort choisi parmi l'acide styrènesulfonique partiellement ou totalement salifié et l'acide 2-méthyl 2-[(1-oxo 2-propènyl) amino] 1-propanesulfonique (dénommé aussi acide 2-acrylamido 2-méthyl propanesulfonique) partiellement ou totalement salifié, copolymérisé avec au moins un monomère neutre choisi parmi l'acrylamide, le méthacrylamide, le diacétoneacrylamide, le diméthylacrylamide, le N-isopropyl acrylamide, l'acrylate de (2-hydroxy éthyle), l'acrylate de (2,3-dihydroxy propyle), le méthacrylate de (2-hydroxy éthyle), le méthacrylate de (2,3-dihydroxy propyle), un dérivé éthoxylé de poids moléculaire compris entre 400 et 1000, de chacun de ces esters ou le vinyl pyrrolidone, ledit polyélectrolyte anionique étant réticulé avec un agent de réticulation choisi parmi le diméthacrylate d'éthylèneglycol, le diacrylate de diéthylèneglycol, le diallyloxyacétate de sodium, le diacrylate d'éthylèneglycol, le diallyl urée, le triallylamine, le triméthylol propanetriacrylate ou le méthylène-bis-(acrylamide) ou un composé de type organométallique choisi dans la colonne IV du tableau de Mendeleïev (Ti, Zr, Hf, Th) et utilisé dans une proportion molaire exprimée par rapport aux monomères mis en oeuvre de 0,002% à 0,5%, ou
o sous forme de poudre obtenue par distillation azéotropique, atomisation ou précipitation dudit latex inverse,
- on injecte ladite composition dans la formation poreuse et perméable.

2. Méthode selon la revendication 1, dans laquelle ledit solvant est un fluide aqueux, organique ou leurs mélanges.

3. Méthode selon la revendication 1 ou 2, dans laquelle le terme salifié indique les sels de métaux alcalins tels que les sels de sodium ou de potassium, les sels de bases azotées comme le sel d'ammonium ou le sel de monoéthanolamine (HO-CH2-CH2-NH4+).

4. Méthode selon l'une des revendications précédentes, dans laquelle l'agent émulsionnant de type eau dans huile (E/H) est un seul tensioactif ou un mélange de tensioactifs à condition que le mélange ait une valeur de HLB suffisamment faible pour induire des émulsions eau dans huile, ledit agent est choisi parmi les tensioactifs suivants: les esters de sorbitan, notamment l'oléate de sorbitan, l'isostéarate de sorbitan, le sesquioléate de sorbitan, des esters de sorbitan polyéthoxylés, notamment le monooléate de sorbitan pentaéthoxylé ou l'isostéarate de sorbitan pentaéthoxylé, l'alcool oléocétylique diéthoxylé, les polyesters de poids moléculaire compris entre 1000 et 3000 produits de la condensation entre un acide poly(isobutènyl) succinique ou son anhydride et un polyéthylène glycol, les copolymères blocks de poids moléculaire compris entre 2500 et 3500.

5. Méthode selon l'une des revendications précédentes, dans laquelle, par agent émulsionnant du type "huile dans eau", on désigne des agents émulsionnants possédant une valeur de HLB suffisamment élevée pour fournir des émulsions huile dans l'eau, ledit agent est choisi parmi: les esters de sorbitan éthoxylés, notamment l'oléate de sorbitan polyéthoxylé avec 20 moles d'oxyde d'éthylène, le laurate de sorbitan polyéthoxylé avec 20 moles d'oxyde d'éthylène, l'huile de ricin polyéthoxylé avec 40 moles d'oxyde d'éthylène, l'alcool oléodécylique décaéthoxylé, l'alcool laurique heptaéthoxylé, le nonylphénol décaéthoxylé, et les hexaoléates de sorbitan polyéthoxylés, et leurs mélanges.

6. Méthode selon l'une des revendications précédentes, dans laquelle la phase huile est constituée soit par une huile minérale commerciale contenant des hydrocarbures saturés comme les paraffines, les isoparaffines, les cycloparaffines, présentant à température ambiante, une densité entre 0,7 et 0,9 et un point d'ébullition supérieur à environ 180°C, soit par une huile de synthèse, ou par une huile végétale ou tout mélange de ces huiles.

7. Méthode selon l'une des revendications précédentes, dans laquelle on injecte ladite composition dans une formation comportant une zone à forte perméabilité à l'eau pour réduire sélectivement la perméabilité à l'eau notamment dans les réservoirs d'huile, de gaz ou dans les stockages de gaz.

8. Méthode selon l'une des revendications précédentes, dans laquelle on injecte ladite composition dans une formation contenant des sables non consolidés.

9. Méthode selon l'une des revendications précédentes, dans laquelle on injecte ladite composition dans une formation de type remblai de façon à en réduire la perméabilité.

## Patentansprüche

1. Verfahren zur Behandlung von Gesteinsformationen, bei welchem die folgenden Schritte ausgeführt werden:
- Herstellen einer flüssigen Zusammensetzung, die Mikrogele aufweist, indem in einem Lösemittel eine Menge, die 0,01 bis 60 Gewichts% der Zusammensetzung ausmacht, eines vernetzten Polymers in Form eines inversen Latex, welcher aus einer Ölphase, einer Wasserphase, mindestens einem Emulgator des Typs Wasser-in-Öl (W/O), mindestens einem Emulgator des Typs Öl-in-Wasser (O/W) besteht, mit 20 bis 60 Gewichts%, und vorzugsweise 25 bis 45 Gewichts% eines vernetzten anionischen Polyelektrolyten auf Basis mindestens eines Monomers mit starker Säurefunktion, unter Rühren vermischt wird, wobei letzteres aus teilweise oder vollständig in die Salzform überführter Styrolsulfonsäure und teilweise oder vollständig in die Salzform überführter 2-Methyl-2-[(1-oxo-2-propenyl)amino]-1-propansulfonsäure (auch als 2-Acrylamido-2-methylpropansulfonsäure bezeichnet) ausgewählt ist und mit mindestens einem neutralen Monomer, welches aus Acrylamid, Methacrylamid, Diacetonacrylamid, Dimethylacrylamid, N-Isopropylacrylamid, (2-Hydroxyethyl)acrylat, (2,3-Dihydroxypropyl)acrylat, (2-Hydroxyethyl)methacrylat, (2,3-Dihydroxypropyl)methacrylat, aus einem ethoxylierten Derivat jedes dieser Ester mit einem Molekulargewicht im Bereich von 400 bis 1.000 oder aus Vinylpyrrolidon ausgewählt ist, copolymerisiert wurde, wobei der anionische Polyelektrolyt mit einem Vernetzungsmittel vernetzt ist, das aus Ethylenglycoldimethacrylat, Diethylenglycoldiacrylat, Natriumdiallyloxyacetat, Ethylenglycoldiacrylat, Diallylharnstoff, Triallylamin, Trimethylolpropantriacrylat oder Methylen-bis(acrylamid) oder einer Verbindung metallorganischer Art, ausgewählt aus der Spalte IV des Periodensystems (Ti, Zr, Hf, Th), ausgewählt ist und in einem molaren Anteil verwendet wird, der, ausgedrückt unter Bezugnahme auf die eingesetzten Monomere, 0,002 bis 0,5 % beträgt,
oder in Form des Pulvers, das durch azeotrope Destillation, Sprühtrocknung oder Fällung des inversen Latex erhalten wird,
- Einpressen der Zusammensetzung in die poröse und durchlässige Formation.

2. Verfahren nach Anspruch 1, wobei das Lösemittel ein wässriges, organisches oder ein Mischung daraus darstellendes Fluid ist.

3. Verfahren nach einem der Ansprüche 1 oder 2, wobei der Begriff "in die Salzform ilberführt" für die Monomere mit starken Säurefunktion angibt, dass es sich um Salze von Alkalimetallen wie etwa Natrium- oder Kaliumsalze, Salze stickstoffhaltiger Basen wie das Ammoniumsalz oder das Monoethanolamin (HO-CH2-CH2-NH4+)-Salz handelt.

4. Verfahren nach einem der vorhergehenden Ansprüche, wobei der Emulgator vom Typ Wasser-in-Öl (W/O) ein einziger grenzflächenaktiver Stoff oder eine Mischung von grenzflächenaktiven Stoffen ist, mit der Maßgabe, dass die Mischung einen HLB-Wert aufweist, der ausreichend niedrig ist, um zur Bildung von Wasser-in-Öl-Emulsionen zu führen, wobei der Stoff aus den folgenden grenzflächenaktiven Stoffe ausgewählt ist: Sorbitanester, insbesondere Sorbitanoleat, Sorbitanisostearat, Sorbitansesquioleat, polyethoxylierte Sorbitanester, insbesondere pentaethoxyliertes Sorbitanmonooleat oder pentaethoxyliertes Sorbitanisostearat, diethoxylierter Oleocetylalkohol, Polyester mit einem Molekulargewicht im Bereich von 1.000 bis 3.000, welche bei Kondensationsreaktionen zwischen Poly(isobutenyl)bernsteinsäure und dessen Anhydrid und einem Polyethylenglycol entstehen, Blockcopolymere mit einem Molekulargewicht im Bereich von 2.500 bis 3.500.

5. Verfahren nach einem der vorhergehenden Ansprüche, wobei unter einem Emulgator des Typs "Öl-in-Wasser" Emulgatoren zu verstehen sind, die einer ausreichend hohen HLB-Wert besitzen, um Öl-in-Wasser Emulsionen zu bilden, wobei der Emulgator ausgewählt ist aus: den ethoxylierten Sorbitanestern, insbesondere polyethoxyliertem Sorbitanoleat mit 20 Mol Ethylenoxid, polyethoxyliertem Sorbitanlaurat mit 20 Mol Ethylenoxid, polyethoxyliertem Rizinusöl mit 40 Mol Ethylenoxid, decaethoxyliertem Oleodecylalkohol, heptaethoxyliertem Laurylalkohol, decaethoxyliertem Nonylphenol und den polyethoxylierten Sorbitanhexaoleaten und deren Mischungen.

6. Verfahren nach einem der vorhergehenden Ansprüche, wobei die Ölphase entweder aus einem im Handel erhältlichen Mineralöl, das gesättigte Kohlenwasserstoffe wie Paraffine, Isoparaffine, Cycloparaffine enthält, welche bei Raumtemperatur eine Dichte zwischen 0,7 und 0,9 und einen Siedepunkt von mehr als ungefähr 180 °C aufweisen, oder aus einem synthetischen Öl oder aus einem pflanzlichen Öl oder einer beliebigen Mischung dieser Öle besteht.

7. Verfahren nach einem der vorhergehenden Ansprüche, wobei die Zusammensetzung in eine Formation eingepresst wird, die einen Bereich mit hoher Wasserdurchlässigkeit aufweist, um auf selektive Weise die Wasserdurchlässigkeit zu verringern, insbesondere bei Öl- und Gaslagerstätten oder bei Gasspeichern.

8. Verfahren nach einem der vorhergehenden Ansprüche, wobei die Zusammensetzung in eine Formation eingepresst wird, die unverfestigte Sande enthält.

9. Verfahren nach einem der vorhergehenden Ansprüche, wobei die Zusammensetzung in eine Formation des Typs Versatz eingepresst wird, um deren Durchlässigkeit zu verringern.

## Claims

1. A method of treating rock formations, wherein the following stages are carried out:
- preparing a liquid composition comprising microgels by mixing in a solvent, under stirring, an amount representing 0.01 % to 60 % by mass of said composition of a cross-linked polymer in form of:
an inverse latex consisting of an oil phase, an aqueous phase, at least one water-in-oil (W/O) type emulsifier, at least one oil-in-water (O/W) type emulsifier, 20 % to 60 % by weight, preferably 25 % to 45 % by weight of a cross-linked anionic polyelectrolyte based on at least one strong acid function monomer selected from among partly or totally salified styrenesulfinic acid and partly or totally salified 2-methyl 2-[(1-oxo 2-propenyl) amino] 1-propanesulfonic acid (also referred to as 2-acrylamido 2-methyl propanesulfonic acid), copolymerized with at least one neutral monomer selected from among acrylamide, methacrylamide, diacetoneacrylamide, dimethylacrylamide, N-isopropyl acrylamide, (2-hydroxy ethyl) acrylate, (2,3-dihydroxy propyl) acrylate, (2-hydroxy ethyl) methacrylate, (2,3-dihydroxy propyl) methacrylate, an ethoxyl derivative, of molecular weight ranging between 400 and 1000, of each of these esters or vinyl pyrrolidone, said anionic polyelectrolyte being cross-linked with a cross-linking agent selected from among ethylene glycol dimethacrylate, diethylene glycol diacrylate, sodium diallyloxyacetate, ethylene glycol diacrylate, diallyl urea, triallylamine, trimethylol propane triacrylate or methylene-bis-(acrylamide) or a compound of organometallic type selected in Column IV of Mendeleev's periodic table (Ti, Zr, Hf, Th) and used in a molar proportion, expressed in relation to the monomers used, of 0.002 % to 0.5 %,
or in form of powder obtained by azeotropic distillation, atomization or precipitation of said inverse latex,
- injecting said composition into the porous and permeable formation.

2. A method as claimed in claim 1, wherein said solvent is an aqueous fluid, an organic fluid or a mixture thereof.

3. A method as claimed in claim 1 or 2, wherein, for strong acid monomers, the term "salified" designates alkali metal salts such as sodium or potassium salts, nitrogenous base salts such as ammonium salt or monoethanolamine salt (HO-CH2-CH2-NH4+).

4. A method as claimed in any one of the previous claims, wherein the water-in-oil (W/O) type emulsifier is a single surfactant or a mixture of surfactants, provided that the mixture has a sufficiently low HLB value to induce water-in-oil emulsions, said emulsifier is selected from among the following surfactants: sorbitan esters, such as sorbitan oleate, sorbitan isostearate, sorbitan sesquioleate, polyethoxylated sorbitan esters, notably pentaethoxylated sorbitan mono-oleate or pentaethoxylated sorbitan isostearate, diethoxylated oleocetylic alcohol, polyesters of molecular weight ranging between 1000 and 3000, products of the condensation between a poly(isobutenyl) succinic acid or its anhydride and a polyethylene glycol, block copolymers of molecular weight ranging between 2500 and 3500.

5. A method as claimed in any one of the previous claims, wherein "oil-in-water" type emulsifiers designate emulsifiers having a sufficiently high HLB value to provide oil-in-water emulsions, said emulsifier being selected from among: ethoxylated sorbitan esters, notably polyethoxylated sorbitan oleate with 20 moles ethylene oxide, polyethoxylated sorbitan laurate with 20 moles ethylene oxide, polyethoxylated ricine oil with 40 moles ethylene oxide, decaethoxylated oleodecylic alcohol, heptaethoxylated lauric alcohol, decaethoxylated nonylphenol, polyethoxylated sorbitan hexaoleates and mixtures thereof.

6. A method as claimed in any one of the previous claims, wherein the oil phase consists of either a commercial mineral oil containing saturated hydrocarbons such as paraffins, isoparaffins, cycloparaffins, having at ambient temperature a density ranging between 0.7 and 0.9 and a boiling-point temperature above about 180°C, or a synthesis oil, or a vegetable oil or any mixture of such oils.

7. A method as claimed in any one of the previous claims, wherein said composition is injected into a formation comprising a high water permeability zone so as to selectively reduce the water permeability, notably in oil, gas reservoirs or in gas storage sites.

8. A method as claimed in any one of the previous claims, wherein said composition is injected into a formation containing unconsolidated sand.

9. A method as claimed in any one of the previous claims, wherein said composition is injected into a fill type formation so as to reduce the permeability thereof.
